# EUROPEAN PATENT APPLICATION

(11) **EP 4 715 673 A1**
(43) Date of publication of application: **25.03.2026**
(21) Application number: 24201923.0
(22) Date of filing: 23.09.2024
(51) Int. Cl.: G06N 3/0464, G06T 1/60, G11C 15/00

(54) **METHOD FOR DATA PROCESSING OF INFORMATION DATA, IN PARTICULAR MEASUREMENT DATA FROM AN EVENT-BASED IMAGE SENSOR, AND DEVICE FOR THIS PURPOSE**

(71) Applicant: Silicon Austria Labs GmbH, 8010 Graz (AT)
(72) Inventor: Gigena Ivanovich, Diego, 8010 Graz (AT); Julián, Pedro, 8010 Graz (AT)
(74) Representative: Wirnsberger & Lerchbaum Patentanwälte OG

(57) **Abstract**

The invention concerns a method for data processing of information data, in particular measurement data from an event-based image sensor (S), the method comprising:
a) providing information data and storing the information data in a takeover memory (TM), wherein a first one of a plurality of content-addressable memory systems (CM1, CM2, CM3), which are each formed with a content-addressable memory (CAM), acts as the takeover memory (TM);
b) processing the information data stored in the takeover memory (TM) of step a) with a neural network (NN), wherein one or successively a plurality of layers (3) of the neural network (NN) are calculated, wherein:
- input data of the respective layer is taken from one of the content-addressable memory systems, and
- output data of the respective layer is stored in another of the content-addressable memory systems,
- wherein with the output data of the respective layer the input data of the respective next layer is formed.

Further the invention concerns a device for data processing of information data.

## Description

The invention concerns a method for data processing of information data, in particular measurement data from an event-based image sensor.

Further, the invention concerns a device for data processing of information data.

Furthermore, the invention concerns a computer program.

It is known to use a computer-implemented neural network for image processing of image data captured with an image sensor, wherein an implementation with a convolutional neural network is often carried out in order to optimize the determined image data. Particularly in real-time applications, high processing speed combined with a compact structure is especially important in order to achieve high operational efficiency. This applies in particular if the image data is sparse, for example when only a small proportion of an image sensor's pixel space measures changes in measured values over time. Data processing methods for image processing often require entire individual images and relatively large storage capacities, which limits their suitability for use in real-time image processing.

It is an object of the invention to provide a method for data processing of information data which enables high utilization efficiency, in particular when the information data is sparse measurement data of an event-based image sensor.

A further object of the invention is to provide a device for data processing of information data, with which a high utilization efficiency, in particular when the information data is sparse measurement data of an event-based image sensor, is enabled.

Furthermore, it is an object of the invention to provide a computer program with which a high utilization efficiency, in particular when the information data is sparse measurement data of an event-based image sensor, is enabled.

To achieve the foregoing object, the invention provides a method for data processing of information data, in particular measurement data from an event-based image sensor, the method comprising:
a) providing information data and storing the information data in a takeover memory, wherein a first one of a plurality of content-addressable memory systems acts as the takeover memory;
b) processing the information data stored in the takeover memory of step a) with a neural network, wherein one or successively a plurality of layers of the neural network are calculated, wherein:
   - input data of the respective layer is taken from one of the content-addressable memory systems, and
   - output data of the respective layer is stored in another of the content-addressable memory systems,
   - wherein with the output data of the respective layer the input data of the respective next layer is formed.

The invention is based on the idea that, in a method for data processing of information data which is usually generated by a sensor, a hardware architecture, in particular a memory architecture, used for the data processing is designed such that the information data, in particular if it is sparse information data, which represents a data matrix with more zero elements than non-zero elements, can be taken over with efficient storage of the information data and processed with high efficiency using a neural network which usually has several layers. This can be achieved with the data processing method.

By storing the provided information data in the takeover memory formed with a respective one of the content-addressable memory systems, in particular in the first content-addressable memory system acting as the takeover memory, the information data can be stored in a time-efficient manner. Typically, the information data is provided, in particular successively or continuously, in order to store it in the takeover memory, in particular in the first content-addressable memory system. The provided information data is usually received by the takeover memory and stored in it. The information data can be provided by a data supply device, such as a sensor, and in particular transmitted to the takeover memory, usually successively or continuously. The information data is usually measurement data from the sensor. The information data can be generated by the data supply device, in particular the sensor.

The data processing method usually comprises a plurality of content-addressable memory systems for processing the information data. The data processing method may comprise a plurality of recording cycles, wherein in each recording cycle one of the content-addressable memory systems acts as the takeover memory for receiving and/or storing provided information data in the recording cycle. The recording cycles are usually carried out one after the other, in particular immediately one after the other. In relation to the respective recording cycle, in the respective next recording cycle another of the content-addressable memory systems acts as the takeover memory. Step a) can be carried out in one of the recording cycles. Step b) can be carried out in one of the recording cycles. Steps a) and b) are usually carried out in different of the recording cycles. When processing the information data that was stored in the content-addressable memory system, which previously acted as the takeover memory, with the neural network, a plurality of the content-addressable memory systems are used to respectively take input data from one of the content-addressable memory systems and store output data in another of the content-addressable memory systems. A start and/or end of the respective recording cycle may be controlled with a processing unit described below. The recording cycle usually has a time duration, in particular a predetermined time duration. Different recording cycles may have different time durations or preferably the same time durations.

The respective content-addressable memory system is usually designed such that a plurality of data sets can be stored in it, wherein for finding a respective stored data set, an identification part of the stored data set is searched for in the content-addressable memory system. The content-addressable memory system is usually designed such that a plurality, in particular all, of the stored data sets can be searched for the identification part at the same time. The identification part can be the identifier described in this document. Typically, at least a part of the respective data set, in particular at least the identification part, is stored in the content-addressable memory of the respective content-addressable memory system. In particular, the data set can thus be identified and/or found by searching for the identification part in the content-addressable memory. The respective content-addressable memory system can comprise the respective content-addressable memory, in particular be the respective content-addressable memory. The respective data set can be stored in the content-addressable memory. The respective content-addressable memory system can comprise an additional memory which is assigned to the content-addressable memory of the content-addressable memory system and which can be addressed via memory addresses of the additional memory, in order to store a content part of the respective data set in the additional memory. The additional memory can be a random-access memory, typically abbreviated as RAM. The respective identification part stored in the content-addressable memory can be assigned one of the memory addresses of the respective additional memory, at which memory address the data value corresponding to the identifier is stored in the additional memory. The identification part and a reference to the respective memory address can be stored in the content-addressable memory, wherein the reference is usually assigned to the identifier. In this way, the respective data set in the respective content-addressable memory system can be efficiently identified and in particular read out with a search in the respective content-addressable memory. In particular, the information data and/or a respective data set can be stored in the respective content-addressable memory system in this way.

Usually, information data provided during a recording period, in particular information data transmitted from the data supply device to the takeover memory during the recording period, is stored in the takeover memory. The recording period can be assigned to the takeover memory. The recording period may be controllably predetermined, particularly by a processing unit described below. The information data is usually provided distributed over the recording period. Typically, after the recording period of the takeover memory has expired, the information data stored in the takeover memory is fed to the neural network as input data of the neural network. The storage in the takeover memory can be performed by changing information data that has, in particular during the recording period, already been stored in the takeover memory. This can be achieved efficiently by implementing the takeover memory with a content-addressable memory system, which comprises a content-addressable memory, for storing the information data, in particular if the information data represents a sparse matrix. The information data can be transmitted, in particular continuously and/or successively, from the data supply device to the takeover memory. The provision of the information data is usually carried out with the data supply device and is in particular a transmission of the information data from the data supply device to the takeover memory. The provision of the information data usually is performed over a provision period that is longer than the recording period and/or preferably comprises a plurality of recording periods and/or a plurality of recording cycles. The provision period can be a measuring period of the sensor, over which the sensor generates information data and, in particular, provides it to the takeover memory.

The information data stored in the takeover memory at the end of a data recording of provided information data with the takeover memory and/or the information data taken from the takeover memory and fed to the neural network for processing with the neural network is preferably sparse information data. A respective data recording with the takeover memory is usually completed when the recording period of the takeover memory expires. Sparse information data are usually information data, which only has evaluable data for a small proportion of an information data space which is represented by the information data. The proportion can be less than 50 %, in particular less than 30 %, preferably less than 20 %. The sparse information data can represent and especially be a data matrix that has more zero elements than non-zero elements. The data matrix may have less than 50 %, in particular less than 30 %, preferably less than 20 %, of non-zero elements. The data matrix can be a sparse matrix. The information data space and/or the data matrix can, for example, correspond to measurement channels of a sensor, in particular pixel elements of an image sensor, wherein less than 50 %, in particular less than 30 %, preferably less than 20 %, of the measurement channels provide information data, particularly in the recording period.

The neural network can have one or more layers. The layers are usually calculated one after the other. The processing of the information data with the neural network, in particular the calculation of the respective layer, can be carried out with a processing unit, in particular computer-implemented. Typically, in step b), the information data stored, particularly in step a), in the takeover memory is processed with the neural network. A plurality of content-addressable memory systems is usually used to carry out the method, with the first content-addressable memory system being part of the plurality of content-addressable memory systems. To calculate the respective layer, the input data of the respective layer can be taken from one of the content-addressable memory systems. The respective layer can be calculated, usually with the processing unit. The output data of the respective layer usually represents a result of the calculation of the layer. The output data of the respective layer is typically stored in one of the content-addressable memory systems other than the content-addressable memory system from which the input data of the layer for calculating the layer is taken. In this way, a high level of efficiency can be achieved when processing the neural network, in particular when calculating the layers. The respective input data is usually based on the information data stored in the takeover memory, in particular in step a). Typically, the input data of one of the layers, in particular a first layer of the layers, is formed with the information data stored in the takeover memory, in particular in step a). The first layer can be the very first of the layers in terms of the processing sequence of the layers. The input data of the neural network can be the input data of the first layer. The input data of the first layer is usually taken from the content-addressable memory system, in particular the first content-addressable memory system, which acts as the takeover memory in step a). This information data can be input data of the neural network in order to process the information data with the neural network. The step b) is usually carried out after the step a).

If the neural network has a plurality of layers, the input data of the respective next layer is typically formed in step b) with, in particular by, the output data of the respective layer in order to calculate the next layer. In step b), in order to calculate the plurality of layers of the neural network, the output data of successive layers can be stored alternately in a third of the content-addressable memory systems or in the first content-addressable memory system. In this way, the calculation can be implemented with little effort, in particular with few components. In step b), data already stored in the content-addressable memory system from a previous step can be deleted and/or overwritten before the output data is stored in order to store the respective output data in the respective content-addressable memory system. This allows the respective output data to be unambiguously identified. In particular, the input data of the respective layer is taken from the first content-addressable memory system or the third content-addressable memory system and the output data of the layer is stored in the respective other of these. The processing of the information data with the neural network, in particular the calculation of the layers, can be carried out with exactly two content-addressable memory systems. Before one of the content-addressable memory systems is used as the takeover memory, data already stored in it is usually deleted. This allows the respective processing data stored in the takeover memory to be unambiguously identified.

In step b), during the processing of the information data with the neural network, a second of the content-addressable memory systems can act as the takeover memory in order to store provided information data, in particular transmitted by the data supply device. This information data can be referred to as further information data. The storage of information data in the respective content-addressable memory system acting as the takeover memory can be carried out as described for the first content-addressable memory system acting as the takeover memory. The takeover memory can be referred to as a new takeover memory, which in particular replaces the function of the previous takeover memory. The second content-addressable memory system acting as the takeover memory can be assigned a recording period as described in this document, in particular above. The previous content-addressable memory system acting as the takeover memory, in particular the first content-addressable memory system, can in particular after using its stored data as input data of the neural network, be used to store output data of one of the layers of the neural network in the processing of the information data with the neural network. This allows to store provided information data in the second content-addressable memory system acting as the takeover memory, while time-parallel a processing of the information data stored in the first content-addressable memory system acting previously as the takeover memory is carried out. In particular, loss of information data transmitted by the data supply device during processing with the neural network can be prevented in this way. The plurality of content-addressable memory systems can, for example, be implemented with at least three, in particular exactly three, content-addressable memory systems. After the information data has been processed with the neural network, the further information data stored in the takeover memory, in particular with taking it from the takeover memory, in particular the second content-addressable memory system acting as the takeover memory, can form the input data for the neural network in order to process the further information data with the neural network. In particular, the processing with the neural network can then be carried out with the further information data. During the processing of the further information data with the neural network, one of the content-addressable memory systems other than the second content-addressable memory system can then act as the takeover memory for storing provided information data, in particular transmitted by the data supply device, for example the first content-addressable memory system or the third content-addressable memory system. The respective next content-addressable memory system acting as the takeover memory can take over the function of the respective previous content-addressable memory system acting as the takeover memory.

The step b), in particular the features of the step b), can be repeated in one or more iterations, wherein in the respective iteration the information data stored with the takeover memory of the previous iteration is processed with the neural network and wherein in the respective iteration a different one of the content-addressable memory systems than in the respective previous iteration acts as the takeover memory. This usually takes place after step b) has been carried out. The method for data processing can have a processing loop with the iterations. The step b), in particular the features of the step b), can represent a part of the respective iteration of the processing loop. Typically, at least two or three iterations are performed. Typically, the iterations are performed immediately after each other. With regard to the respective iteration, the respective previous iteration refers to the iteration that was carried out immediately before the respective iteration. For example, in successive iterations, the first content-addressable memory system and the second content-addressable memory system can alternately act as, and in particular form, the takeover memory. With the respective content-addressable memory system acting as the takeover memory, provided information data, which particularly is provided by the data supply device, usually in the respective recording period, can be stored in the takeover memory, while in particular temporally overlapping, in particular temporally parallel, other of the content-addressable memory systems, which in particular comprise the content-addressable memory system acting as the takeover memory in the respective previous iteration, can be used to store output data during processing with the neural network. In particular, the first content-addressable memory system or the third content-addressable memory system of a respective iteration may function as the second content-addressable memory system of the next iteration, and/or the second content-addressable memory system of a respective iteration may function as the first content-addressable memory system or third content-addressable memory system of the next iteration. In particular, iterations can be performed as long as data transmitted by the data supply device is to be processed using the data processing method, in particular using the neural network. The takeover memory of the respective iteration usually refers to the takeover memory that is used in the respective iteration to store the, in particular by the data supply device, provided information data. Typically, the information data stored in the takeover memory of the respective previous iteration is processed in the respective iteration with the neural network. In the respective iteration, the takeover memory of step a) referred to in step b) may be replaced by the content-addressable memory system acting as the takeover memory in the respective previous iteration. In the respective iteration, the second content-addressable memory system acting as the takeover memory in step b) can be replaced in that another one of the content-addressable memory systems than in the respective previous iteration acts as the takeover memory. In the respective iteration, the provided information data is usually stored in the respective takeover memory for a respective recording period, which can have the same or different time durations for different iterations. Preferably, the provided information data is stored in the respective takeover memory of the respective iterations essentially at least until a respective temporally overlapping, in particular time-parallel, processing of the information data stored in the takeover memory of the respective previous iteration with the neural network, in particular the calculation of the layers of the neural network, has been completed. The processing loop can be carried out in a step c) after step b). Typically, the respective content-addressable memory system acting as the takeover memory is denoted as the respective takeover memory.

Usually, the respective takeover memory, in particular a respective acting of one of the content-addressable memory systems as the takeover memory, is assigned a, particularly above-mentioned, respective recording period. Information data provided during the recording period is stored in the respective takeover memory. The recording period can be implemented as described. The start and/or the end of the respective recording period can be controlled, in particular with the processing unit. The recording period usually has a time duration, in particular a predefined time duration. The duration of the recording period can be specified, in particular controlled, by the processing unit. This applies in particular to step a) and/or step b). In particular, this applies to the respective iteration of the iteration loop. A respective function of one of the content-addressable memory systems as the takeover memory can be assigned its own recording period. Different recording periods can have different time durations or preferably the same time duration. The respective recording cycle can comprise one, in particular exactly one, of the recording periods. Specifically, the respective recording cycle can be one of the recording periods.

The storage, in particular of the provided information data, in the respective takeover memory may be performed with incremental adaptation of information data already stored in the takeover memory. Storage in the takeover memory can take place with incremental adaptation of information data already stored in the takeover memory. The incremental adaptation can be an increase or decrease of an information variable represented by the stored information data. In this way, information data corresponding to changes in an information variable described by the information data, in particular a measured variable, can be stored efficiently. For example, the information data can be formed with a plurality of data sets transmitted spaced apart in time to the takeover memory for storage, wherein the data sets describe a change in an information variable described by the data sets. The information variable can, for example, be an intensity of a physical variable described by the information data, such as a measured variable of the sensor. The aforementioned can apply in particular to the storage of the information data in the respective content-addressable memory system acting as the takeover memory, in particular the first content-addressable memory system and/or second content-addressable memory system acting as the takeover memory.

The information data can comprise a plurality of data sets, each comprising an identifier and usually a data value. This may apply to the provided information data. This may apply to the information data, especially the input data and/or the output data, stored in the respective content-addressable memory system. This may apply to the information data stored in the respective takeover memory. The information data can be stored in the respective content-addressable memory system, in particular in the takeover memory, such that the respective data set can be identified by searching for the identifier in the content-addressable memory. Typically, the information data is stored in the respective content-addressable memory system, in particular in the takeover memory, in such a way that the identifier is stored in the content-addressable memory of the content-addressable memory system. In particular, the data set can thus be identified and/or found in the respective content-addressable memory system by searching for the identifier in the respective content-addressable memory. This can apply analogously to the takeover memory. With the identifier, the respective data set can be assigned, in particular identified in the respective content-addressable memory system, particularly in the takeover memory. In particular, the information data stored in the takeover memory can comprise several data sets, each formed with an identifier and a data value, in order to identify the respective data set with the identifier and change the data value of the data set in order to adapt the data sets. The data value of the provided data set can, for example, be an intensity value, in particular a change in an intensity value, which was generated, for example, with the data supply device, in particular determined by the sensor. Usually, in particular in the respective recording period, a plurality of data sets designated with different identifiers are provided, whereby for a plurality of different ones of the identifiers, a plurality of the data sets are provided one after the other spaced in time. The data sets stored in the takeover memory usually comprise the identifier and typically the data value. The information data, in particular data sets, are usually provided by the data supply device. The data value of the respective data set can be stored in the respective content-addressable memory. Alternatively, the respective content-addressable memory system, in particular the takeover memory, can comprise an additional memory assigned to the content-addressable memory of the content-addressable memory system, which can be addressed via memory addresses of the additional memory, in order to store the data value of the respective data set in the additional memory. This can be implemented as described, in particular above, in this document. The additional memory can be a random-access memory, typically abbreviated as RAM. The respective identifier stored in the content-addressable memory can be assigned one of the memory addresses of the respective additional memory, at which memory address the data value corresponding to the identifier is stored in the additional memory. The identifier can be stored together with a reference to the respective memory address in the content-addressable memory, wherein the reference is usually assigned to the identifier. In this way, the respective data set in the respective content-addressable memory system can be efficiently identified and in particular read out with a search in the respective content-addressable memory. In particular, the information data and/or a respective data set can be stored in this way in the respective content-addressable memory system, in particular in the takeover memory. This can apply analogously to the storage of data, in particular the input data and/or the output data, in the respective content-addressable memory system. Typically, in an analogous manner, the input data and/or the output data each comprise a plurality of data sets, wherein the respective data set comprises an identifier and a data value.

It may be practical if the provided data sets comprise the identifier and, in particular, no data value which corresponds to an intensity, in particular a change in an intensity, of a measured variable. The provided information data, in particular provided data sets, can represent a plurality of measurement events of the sensor that are spaced apart in time, wherein a respective measurement event indicates a change in a measuring variable of the sensor. The provided data sets can indicate an occurrence of the measurement events. Typically, a respective data set is generated with the sensor when a specific, in particular predefined, measurement event is measured with the sensor. The measurement events can be assigned to different types of measurement events, wherein the identifier of the respective data set indicates the type of measurement event to which the data set corresponds. The types can, for example, represent measurement channels, in particular pixel elements, of the sensor. A predetermined, in particular constant, data value can be used to store the respective provided data set, in order to store the provided data set according to the predetermined data value. The predetermined data value can be preset or specified with the processing unit.

To adapt a data set stored in the takeover memory based on a provided data set, the stored data set can be identified with the identifier of the provided data set and the data value of the stored data set can be changed, in particular increased or decreased. The adaption, in particular the change, of the data set can be made incrementally. Typically, the stored data set is changed in accordance with a value predetermined, in particular by the processing unit, or in accordance with the data value of the data set provided. The data sets provided for the same identifier during the recording period can be accumulated in the corresponding data set stored in the takeover memory. As part of storing a respective provided data set in the takeover memory, a comparison process can be carried out to compare whether a stored data set, comprising an identifier in accordance with the provided data set, is already present in the takeover memory, after which, if such a stored data set is present, the stored data set is adapted and, if such a stored data set is not present, a data set with such an identifier, in particular based on the provided data set, is created in the takeover memory. The above applies in particular to the storage of the provided information data in the respective takeover memory, in particular the first content-addressable memory system and/or the second content-addressable memory system.

The input data and the output data usually comprise a plurality of data sets, wherein the respective data set is formed with an identifier and a data value. The identifier can be used to identify the data set. The data value can represent an intensity assigned to the identifier. The input data and the output data, in particular their data sets, can be implemented analogously to the data sets stored in the respective takeover memory and/or stored in the respective content-addressable memory system.

The information data can be transmitted from the data supply device to the takeover memory, in particular the respective content-addressable memory system acting as the takeover memory, over at least the recording period. The data supply device can be a sensor which, in particular, determines the information data over at least the recording period, usually over several recording periods. The sensor may be the sensor described above in this document. The data supply device can transmit a plurality of data sets with the same identifier to the takeover memory over the recording period, especially at intervals, in particular for different identifiers. The information data can be provided continuously and/or successively over the recording period, in particular by the data supply device.

The sensor can comprise several measuring channels in order to carry out time-parallel measurements with the measuring channels. The measuring channels can be different measuring elements of the measuring sensor, which respectively measure a measured variable, in particular a change in a measuring variable. The identifiers can be assigned to the measuring channels, in particular uniquely. It may be provided that, in particular in the respective recording period of less than 50 %, in particular less than 30 %, preferably less than 20 %, of the measurement channels, data sets are provided. This enables a particularly advantageous operational capability.

The sensor can be an image sensor, in particular an event-based image sensor. The information data can be measurement data, especially image data, of the image sensor. The image sensor can be a pixel-based image sensor, in particular a multi-dimensional image sensor, wherein the image sensor usually has a multi-dimensional pixel element arrangement for measurement. The measuring channels can be pixel elements of the image sensor. The identifiers can identify pixel elements of the image sensor, in particular uniquely. The data values of the provided data sets can correspond to intensity values, in particular changes in intensity values, measured with the pixel elements. The event-based image sensor is usually designed to generate a respective data set to be provided in relation to the respective pixel element if an intensity change measured with the pixel element exceeds a threshold value. Preferably, the provided data set comprises the identifier and does not comprise a data value indicating the intensity change. However, it may be practicable if the data value of the provided data set indicates the intensity change. The image sensor, in particular an event-based image sensor, can be a camera, in particular an event-based camera.

Descriptions in this document on the, especially respective, takeover memory usually apply to the respective content-addressable memory system acting as the takeover memory, particularly when it acts as the takeover memory. Descriptions in this document on the takeover memory usually apply to the respective takeover memory, in particular to the respective content-addressable memory system acting as the takeover memory. Typically, the provision period and/or the recording period are each time periods, in particular with a time duration, wherein the time duration may be set in a controlled manner or may be predefined. The respective content-addressable memory system can be designated as a processing memory unit.

Typically, provided information data refers to information data that is transmitted from the data supply device for storage with a respective takeover memory. Usually, stored information data refers to information data that is stored in the respective takeover memory. This applies analogously to the data sets of the respective information data. Stored information data, in particular stored data sets, can also be referred to as collection data, in particular collection data sets. This applies in particular to information data, in particular data sets, stored in the respective takeover memory. The provided data sets can then be stored as collection data in the respective takeover memory.

The neural network can be a feed-forward neural network or a recurrent neural network. The neural network can be a convolutional neural network. The layers, especially one or more of the layers, can be convolutional layers. Neurons of the respective layer can form a neuron arrangement corresponding to the measuring channels, in particular to the multidimensional pixel arrangement. The input data of the respective layer is usually assigned to the neuron arrangement. When calculating the respective layer, output data of the respective layer can be calculated by means of areawise, and particularly discrete, convolution of the input data, especially corresponding to the neuron arrangement, wherein a convolution matrix is usually moved across the neuron arrangement area by area and a convolution of the input data of the respective area is calculated respectively in order to form the output data of the layer, in particular of the respective area of the layer.

The respective content-addressable memory system is usually formed with the content-addressable memory such that the content-addressable memory system comprises the content-addressable memory. In particular, the content-addressable memory system can consist of the content-addressable memory. The first content-addressable memory system, the second content-addressable memory system and/or the third content-addressable memory system is usually part of the plurality of content-addressable memory systems. Usually, during the respective recording period exactly one of the content-addressable memory systems acts as the takeover memory. The takeover memory is usually the one of the content-addressable memory systems with which provided information data is stored in order to subsequently process the stored information data with the neural network. The respective content-addressable memory system usually comprises its own content-addressable memory.

The method can be implemented with exactly two or exactly three or more than three content-addressable memory systems. If the method is implemented with exactly two content-addressable memory systems, one of the content-addressable memory systems can act as the takeover memory, in particular in step a). Then, in particular in step b) and/or c), for processing the information data with the neural network, the input data of the respective layer can be taken from one of the two content-addressable memory systems and the output data of the respective layer can be stored in the other of the two content-addressable memory systems. If the method has exactly three or more than three content-addressable memory systems, during the processing of the stored information data with the neural network, in particular in step b) and/or c), wherein the input data of the respective layer is taken from one of the content-addressable memory systems and the output data of the respective layer is stored in another of the content-addressable memory systems, a further one of the content-addressable memory systems can act as the takeover memory to store information data provided, in particular transmitted, during the processing of the stored information data with the neural network. In this way, a loss of transmitted information data can be reduced, in particular prevented. The processing of the stored information data with the neural network can take place within a processing period. A time duration of the processing period can be longer than the time duration of the recording period of the respective content-addressable memory system acting as a takeover memory. It may be advantageous if, during the processing period, multiple of the content-addressable memory systems act, in particular chronologically, as the takeover memory in order to store the provided, in particular transmitted, information data. The multiple content-addressable memory systems can form a takeover memory queue. This applies in particular if the method has more than three content-addressable memory systems. At the end of the recording period of one of the content-addressable memory systems of the takeover memory queue, the respective next content-addressable memory system of the takeover memory queue can act as the takeover memory. After the processing time has elapsed, the information data stored in the content-addressable memory systems of the takeover memory queue can be processed with the neural network. The number of content-addressable memory systems in the takeover memory queue can vary depending on the time duration of the processing period.

The number of the content-addressable memory systems can be one greater than the number of layers of the neural network. This can be favorable in order to store the output data of each of the layers in a different one of the content-addressable memory systems. For high efficiency, it is usually favorable if the number of content-addressable memory systems is smaller than the number of layers of the neural network.

The processing unit can comprise a microprocessor which is adapted to control the method and/or to perform the processing with the neural network, in particular the calculation of the layers. Typically, the method, in particular the processing of the information data with the neural network, is computer-aided, in particular computer-implemented. The information data stored in the takeover memory and/or the input data of the neural network can represent, in particular be, sparse information data.

The processing unit can comprise a microprocessor which is adapted to control the method and/or to perform the processing with the neural network, in particular the calculation of the layers. Typically, the method, in particular the processing of the information data with the neural network, is computer-aided, in particular computer-implemented. The information data stored in the takeover memory and/or the input data of the neural network can represent, in particular be, sparse information data. This applies in particular in a state of the respective takeover memory at the end of the respective recording period and/or when the information data from the takeover memory is supplied to the neural network for processing with the neural network.

To achieve the foregoing further object, the invention provides a device for data processing of information data, wherein the device comprises a processing unit and a plurality of content-addressable memory systems, wherein the processing unit and/or the content-addressable memory systems are adapted execute the method for data processing of information data as described in this document. In this way, a high level of efficiency can be achieved, in particular as explained above for the method for data processing of information data, in particular both when the information data is taken over by the respective takeover memory and when the stored information data is processed with the neural network. This applies in particular if the information data is sparse information data, which in particular represents a data matrix with more zero elements than non-zero elements.

The processing unit can comprise a microprocessor, in particular several microprocessors, which are usually designed to control the method and/or carry out the processing of the information data with the neural network, in particular the calculation of the layers. The device for data processing may have a data supply device, in particular a sensor, to provide the information data, in particular to transmit the information data to the takeover memory. The processing unit and/or the content-addressable memory systems and/or the data supply device may be those described for the method for information data.

The device for data processing can be implemented in the form of a semiconductor component, in particular a microchip.

The device for data processing can be designed in accordance with the features and effects described in the context of the method for data processing, in particular above, in this document. The same applies to the method for data processing with regard to the device for data processing.

A measuring system may be provided, wherein the measuring system comprises a sensor and the device for data processing in order to process information data which is generated with the sensor by the device for data processing. The information data is usually measurement data from the sensor. The sensor can be an image sensor, in particular an event-based image sensor. The sensor, in particular the image sensor, can be implemented as described in this document. The sensor can be the data supply device, in particular sensor, described in this document. The measuring system can be a measuring device. If the sensor is an image sensor, the measuring system can be a device for image acquisition. The measuring system is usually designed to carry out the method for data processing of information data described in this document.

The sensor is usually designed to provide and in particular transmit the information data, particularly to the data processing device, especially to the respective content-addressable memory system of the data processing device acting as the takeover memory. The sensor and the data processing device can be connected to each other, in particular wirelessly or by cable, to transmit the information data. The measuring system can be implemented in the form of a semiconductor component, particularly a microchip.

The measuring system can be designed in accordance with the features and effects described in the context of the method for data processing, in particular as described above. The same applies analogously to the method for data processing with regard to the measuring system.

To achieve the foregoing furthermore object, the invention provides a computer program, wherein the computer program comprises instructions to cause a device for data processing as described in this document to execute the method for data processing as described in this document.

Another objective of the invention is achieved with a computer-readable medium having stored thereon the computer program described in this document. This enables practicable execution of the computer program or implementation of the method for data processing of information data. The computer readable medium can be designed as a volatile or non-volatile storage medium. The computer-readable medium can be designed as part of the aforementioned device for data processing. In this way, a high level of efficiency can be achieved, in particular as explained above for the method for data processing of information data, in particular both when the information data is taken over by the respective takeover memory and when the stored information data is processed with the neural network. This applies in particular if the information data is sparse information data, which in particular represents a data matrix with more zero elements than non-zero elements.

The invention will now be described by way of example with reference to the accompanying drawings, in which:
Fig. 1 shows a schematic diagram of a method for data processing of measurement events from an event-based image sensor with a plurality of content-addressable memory systems, which each comprise a content-addressable memory;
Fig. 2 shows schematically a storage of the measurement events in a content-addressable memory system, which is formed by a content-addressable memory;
Fig. 3 shows schematically a storage of the measurement events in a content-addressable memory system, which is formed by a content-addressable memory and a random-access memory.

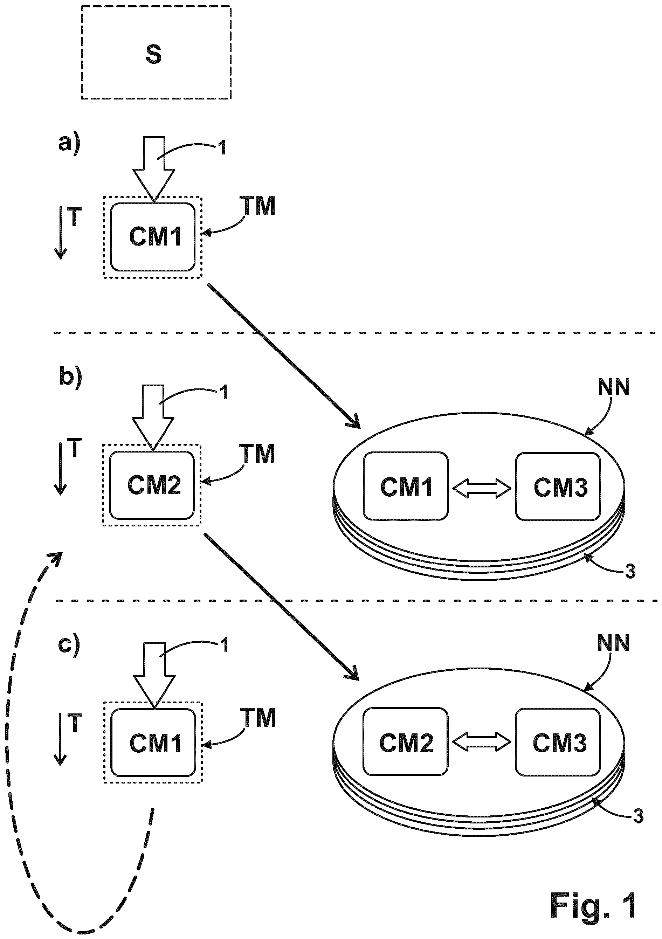

Fig. 1 shows schematically a workflow of a method for data processing of information data with a plurality of content-addressable memory systems CM1, CM2, CM3, which each are formed with a content-addressable memory CAM, wherein information data is provided, which are successively provided measurement events 1. The measurement events can be generated by a data supply device designed as an event-based image sensor S. The measurement events are provided as part of the method, in particular successively. The generation of the measurement events with the image sensor S can be part of the method.

The event-based image sensor S usually has a multidimensional pixel element arrangement for measurement, wherein the image sensor S generates a measurement event in the form of a data set in relation to the respective pixel element if an intensity change measured with the pixel element exceeds a predefined threshold value. Successive intensity changes can be measured with the respective pixel element, wherein a respective intensity change triggers the generation of an associated data set. The respective data set can comprise an identifier I that identifies the pixel element that triggered the generation of the data set. For example, the identifier I can be formed with, usually two-dimensional, coordinates of the respective pixel element.

The measurement events can be successively provided in the form of data sets, in particular by the image sensor S, wherein the respective data set usually identifies the respective one of the pixel elements of the image sensor S with its identifier I. The provided data sets are stored in a takeover memory TM, wherein a first content-addressable memory system CM1 acts as the takeover memory TM. The data sets can be successively transmitted to the takeover memory TM by the image sensor S, in particular immediately after they have been generated with the image sensor S.

During a recording period T of the takeover memory TM, data sets provided, in particular transmitted from the sensor S to the takeover memory TM, are stored by the takeover memory TM. The respective provided data set can be stored in the takeover memory TM such that a comparison process is carried out in which it is compared whether a stored data set 2 with an identifier I in accordance with the data set provided is already present in the takeover memory TM, after which in the case of the presence of such a stored data set 2 the stored data set 2 is adapted and in the case of the absence of such a stored data set 2 a data set with an identifier I in accordance with the data set provided is created in the takeover memory TM. In this way, transmitted data sets which have the same identifier are represented by a jointly stored data set in the takeover memory TM, wherein the stored data set has the identifier I and a data value DV which is adapted based on the data sets transmitted with the identifier I.

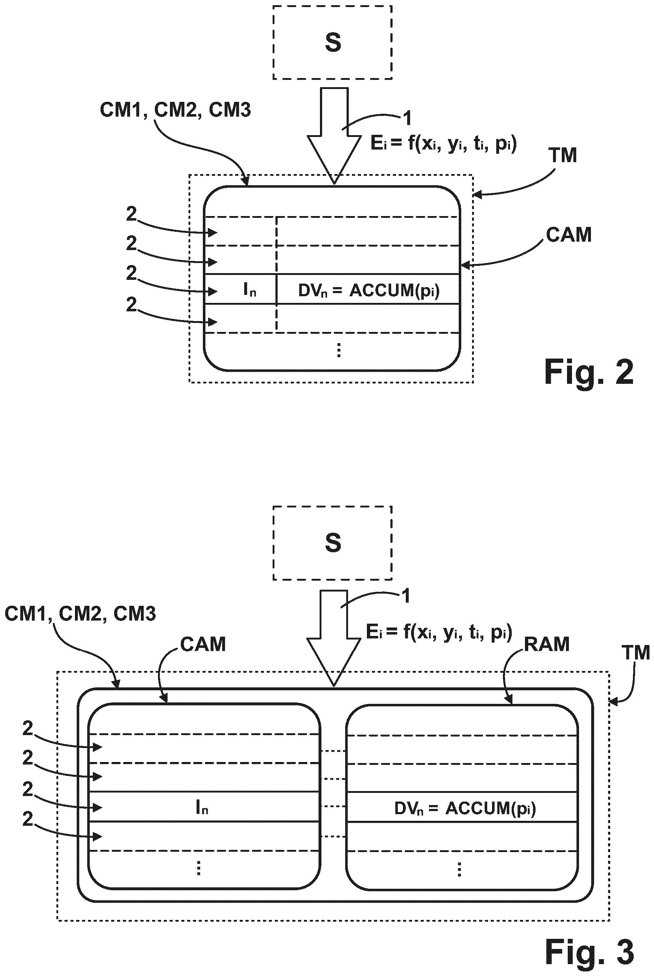

In Fig. 2 and Fig. 3 schematically a storage of the measurement events 1 in one of the content-addressable memory systems CM1, CM2, CM3, which functions as a takeover memory TM, is shown. The respective content-addressable memory system CM1, CM2, CM3 can be formed by a content-addressable memory CAM, shown in Fig. 2. The identifier and the data value of the respective data set can then be stored in the content-addressable memory CAM of the content-addressable memory system, wherein the data value DV is assigned to the identifier I. Alternatively, the respective content-addressable memory system can be formed by a content-addressable memory CAM and a random-access memory RAM assigned to the content-addressable memory CAM as an additional memory, as shown in Fig. 3. The identifier can be stored in the content-addressable memory CAM and the data value DV assigned to the identifier I can be stored in the random-access memory RAM. Usually, a memory address of the random-access memory RAM is assigned to the identifier I stored in the content-addressable memory CAM, at which memory address the data value DV is stored. The identifier I can then be stored in the content-addressable memory CAM together with a reference to the respective memory address.

The respective data set 2 stored in the takeover memory TM usually comprises the identifier I and a data value DV assigned to the identifier I. The adaption of the stored data set 2 can be an incremental adaption of the data value DV of the stored data set. The data sets provided for the same identifier I during the recording period T can be accumulated in the corresponding data set 2 stored in the takeover memory TM. For example, the data value DV of the stored data set 2 can be adapted, in particular increased or decreased, by a predefined value in the adaption. This is shown schematically in Fig. 2 and Fig. 3 for a respective content-addressable memory system CM1, CM2, CM3 acting as the takeover memory TM, where Iₙ indicates the identifier I of a stored data set n, DV the data value DV of the stored data set n and ACCUM() an accumulation function which represents the incremental adaption of the data value DV of the stored data set n when storing a measurement event with the identifier I. The respective data set stored in the takeover memory TM is indicated in Fig. 2 by the reference sign 2. In particular, the data value DV of the stored data set can be used, for example, to represent a number of data sets provided by the image sensor S for a respective identifier I during the recording period T. The data value DV of the stored data set can then correspond to a cumulative intensity change, which was determined during the recording period T with the pixel element corresponding to the data set.

Alternatively or cumulatively, the data set provided can comprise a data value DV in addition to the identifier I, which indicates, for example, a magnitude and/or direction of the corresponding intensity change. The adaptation of the stored data set 2 can then be performed by adapting the data value DV of the stored data set 2 based on the data value DV of the provided data set. For example, the stored data set 2 can be increased or decreased according to the data value DV of the provided data set.

For example, a respective data set transmitted to the takeover memory TM, which usually corresponds to a measurement event 1, can comprise an identifier I, a polarity p and usually a time stamp t. The identifier can be formed with or can be the spatial coordinates x and y, which are specified by the respective pixel element. The polarity p can indicate a sign of the measured intensity change, for example indicated with a positive or negative number. The time stamp t can be a variable that increases, in particular monotonically, with the number of data sets generated by the image sensor S. The transmitted data set is shown exemplarily in Fig. 2 and Fig. 3 as Eᵢ = (xᵢ, yᵢ, tᵢ, pᵢ), where i is a running index of the transmitted data sets. The generated data sets that are transmitted to the takeover memory TM in a respective recording period T can be stored in the respective takeover memory TM as described. For this purpose, the transmitted data sets are stored in the takeover memory TM according to their identifiers I, wherein transmitted data sets with the same identifier I are represented by a jointly stored data set 2 in the takeover memory TM, wherein a data value DV of the stored data set 2 is assigned to the respective identifier I, which data value DV usually describes an accumulation, for example a sum, of the polarities p of the data sets transmitted for the identifier. At the end of the recording period, the data sets stored in the takeover memory TM, in particular their data values DV, can form a sparse matrix.

The above may be implemented as part of step a) of the method for data processing.

After the measurement events have been stored in the first content-addressable memory system CM1, which acts as the takeover memory TM, in a next step, in particular in a step b) of the method for data processing, the data sets stored with the first content-addressable memory system CM1 are processed with a neural network NN. This usually is carried out after the recording period T of the takeover memory TM has ended. To process the information data stored in the first content-addressable memory system CM1 with the neural network NN, several layers 3 of the neural network NN are calculated. The information data stored in the first content-addressable memory system CM1 is used as input data for the neural network NN, in particular as input data for a first layer of the layers 3. Output data of the first layer is stored in the third content-addressable memory system CM3. The output data of successive layers 3 is stored alternately in a third content-addressable memory system CM3 or in the first content-addressable memory system CM1. Typically, the neural network NN has at least one or more layers 3 subsequent to the first layer, to which this applies. With the output data of the respective layer, input data of the respective next layer is formed. The input data of the respective layer 3 is usually taken from that content-addressable memory system CM1, CM2, CM3 in which the output data of the respective previous layer was stored. The processing with the neural network NN, in particular the calculation of the respective layer 3, can be carried out computer-implemented with a processing unit, which can be formed with one or more microprocessors. The respective output data usually comprises a plurality of data sets, wherein the respective data set comprises an identifier I and a data value DV. The data sets can be stored in the respective content-addressable memory system CM1, CM2, CM3 as described in Fig. 2 or Fig. 3.

When calculating the respective layer 3, output data of the respective layer 3 can be calculated by means of areawise, in particular discrete, convolution of the input data, whereby a convolution matrix is usually moved across the input data area by area and a convolution of the input data of the respective area is calculated respectively in order to form the output data of the layer 3, in particular of the respective area of the layer 3. One or more of the layers 3 can be calculated in this way. The input data and output data can each represent a matrix, wherein usually the identifiers, in particular the respective coordinates x and y, may define the dimensions, in particular rows and columns, of the matrix.

During the processing of the data sets stored in the first content-addressable memory system CM1 with the neural network NN, a second content-addressable memory system CM2 can act as the takeover memory TM in order to store provided information data, especially provided measurement events 1, which may be provided by the image sensor S. The storage is again carried out for a recording period T assigned to the takeover memory TM. A respective acting of one of the content-addressable memory systems CM1, CM2, CM3 as the takeover memory TM can be carried out with the same or different recording periods T.

In particular, in an analogous manner as described above, after the provided measurement events, especially provided data sets, have been stored in the second content-addressable memory system CM2 acting as the takeover memory TM, the data sets 2 stored with the second content-addressable memory system CM2 can then be processed with the neural network NN in a next step, which may be a step c) of the method for data processing. This is usually carried out after the recording period T of the second content-addressable memory system CM2 acting as the takeover memory TM has ended. Processing with the neural network NN can be implemented in the same way as described above, wherein in particular the second content-addressable memory system CM2 now takes on the function of the first content-addressable memory system CM1. Typically, the input data of the neural network NN, in particular the data sets 2 stored in the second content-addressable memory system CM2, are the input data for the first layer of the layers 3, wherein the output data of the first layer is stored in the third content-addressable memory system CM3. The output data from successive layers 3 are alternately stored in the third content-addressable memory system CM3 or in the second content-addressable memory system CM2.

During the processing of the data sets 2 stored in the second content-addressable memory system CM2 with the neural network NN, the first content-addressable memory system CM1 can again act as the takeover memory TM to store measurement events, in particular provided by the image sensor S. This can be implemented as described above.

In this way, for a plurality of consecutive recording periods T, the first content-addressable memory system CM1 and the second content-addressable memory system CM2 can alternately act as the takeover memory TM for storing provided information data, especially measurement events 1, wherein during the respective recording period T, data sets 2 stored in the respective previous takeover memory TM in the respective previous recording period T are processed with the neural network NN. This can be implemented in a processing loop with several iterations, wherein in the respective iteration storing of provided information data, especially provided measurement events 1, in one of the content-addressable memory systems CM1, CM2, CM3 acting as the takeover memory TM is carried out for the associated recording period T, wherein time-parallel the processing of the information data, particularly data sets 2, stored in the takeover memory TM of the previous iteration is carried out with the neural network NN. Processing loop can be implemented as part of step c) of the method for data processing.

This allows a high level of operational efficiency of the data processing to be achieved, in particular both when the measurement events provided are stored in the takeover memory TM and when the data sets stored in the takeover memory TM are processed with the neural network NN. In particular, if the information data stored in the takeover memory at the respective recording period and/or the information data supplied for processing to the neural network are sparse, for example have more zero elements than non-zero elements, as is usually the case with an event-based image sensor, a compact implementation with high operational efficiency can be achieved.

## Claims

1. Method for data processing of information data, in particular measurement data from an event-based image sensor (S), the method comprising:
a) providing information data and storing the information data in a takeover memory (TM), wherein a first one of a plurality of content-addressable memory systems (CM1, CM2, CM3), which are each formed with a content-addressable memory (CAM), acts as the takeover memory (TM);
b) processing the information data stored in the takeover memory (TM) of step a) with a neural network (NN), wherein one or successively a plurality of layers (3) of the neural network (NN) are calculated, wherein:
- input data of the respective layer is taken from one of the content-addressable memory systems, and
- output data of the respective layer is stored in another of the content-addressable memory systems,
- wherein with the output data of the respective layer the input data of the respective next layer is formed.

2. Method according to the claim 1, wherein in step b), for calculating the plurality of layers (3), the output data of successive layers (3) are stored alternately in a second of the content-addressable memory systems (CM2) or in the first content-addressable memory system (CM1).

3. Method according to the claim 1 or 2, wherein in step b), during the processing of the information data with the neural network (NN), a second of the content-addressable memory systems (CM2) can act as the takeover memory (TM) in order to store provided information data.

4. Method according to the claim 3, wherein the step b), in particular the features of the step b), can be repeated in one or more iterations, wherein in the respective iteration the information data stored with the takeover memory (TM) of the previous iteration is processed with the neural network (NN) and wherein in the respective iteration a different one of the content-addressable memory systems (CM1, CM2, CM3) than in the respective previous iteration acts as the takeover memory (TM).

5. Method according to any one of the claims 1 to 4, wherein a recording period (T) is assigned to the respective content-addressable memory system (CM1, CM2, CM3) acting as the takeover memory (TM), wherein information data provided during the recording period (T) is stored in the takeover memory (TM).

6. Method according to any one of the claims 1 to 5, wherein the storage in the takeover memory (TM) is performed with incremental adaptation of information data already stored in the takeover memory (TM).

7. Method according to any one of the claims 1 to 6, wherein the information data stored in the takeover memory (TM) comprises a plurality of stored data sets (3), each comprising an identifier (I) and a data value (DV), for identifying the respective data set (3) with the identifier (I) and changing the data value (DV) in order to adapt the stored data sets (3).

8. Method according to claim 7, wherein the identifier (I) of the respective stored data set is stored in the content-addressable memory (CAM) of the takeover memory (TM).

9. Method according to any one of the claims 1 to 8, wherein the provided information data represent a plurality of measurement events of a sensor (S) spaced apart in time, wherein the respective measurement event indicates a change in a measuring variable of the sensor (S).

10. Method according to any one of the claims 1 to 9, wherein the information data are measurement data of an image sensor, in particular an event-based image sensor (S), wherein the identifiers (I) identify pixel elements of the image sensor and the data values (DV) correspond to intensity values, in particular changes in intensity values, of the pixel elements.

11. Method according to any one of the claims 1 to 10, wherein the neural network (NN) is a convolutional neural network (NN).

12. Device for data processing of information data, wherein the device comprises a processing unit and a plurality of content-addressable memory systems (CM1, CM2, CM3), each comprising a content-addressable memory (CAM), which are adapted to execute the method according to one of the claims 1 to 11.

13. Measuring system, comprising a sensor (S), in particular an event-based image sensor (S), and a device for data processing according to claim 12, in order to process information data which is generated with the sensor (S) with the device for data processing.

14. A computer program comprising instructions to cause the device for data processing of claim 12 or the measuring system of 13 to execute the method for data processing of any one of the claims 1 to 11.

15. A computer-readable medium having stored thereon the computer program according to claim 14.
